# EUROPÄISCHE PATENTSCHRIFT

(11) **EP 1 933 048 B1**
(45) Veröffentlichungstag und Bekanntmachung des Hinweises auf die Patenterteilung: **19.06.2013**
(21) Anmeldenummer: 07450230.3
(22) Anmeldetag: 07.12.2007
(51) Int. Cl.: F16C 33/12

(54) **Gleitlager**
Sliding bearing
Palier lisse

(30) Priorität: 13.12.2006 AT 20522006
(43) Veröffentlichungstag der Anmeldung: 18.06.2008
(73) Patentinhaber: Miba Gleitlager GmbH, 4663 Laakirchen (AT); KS Gleitlager GmbH, 68789 St. Leon-Rot (DE)
(72) Erfinder: Zidar, Jakob, 4813 Altmünster (AT); Schubert, Werner, 69168 Wiesloch-Baiertal (DE); Seremeti, Megjit, 26871 Papenburg (DE)
(74) Vertreter: Hübscher, Helmut

(56) Entgegenhaltungen:
- WO-A1-00/06788
- WO-A1-96/15382
- WO-A1-97/22725
- BE-A- 685 810
- DE-A1- 10 149 675
- DE-A1-102005 023 308
- US-A- 4 590 133

## Beschreibung

Die Erfindung bezieht sich auf ein Gleitlager mit einer von einer Stützschale getragenen Lagermetallschicht aus einer Aluminium- oder Kupferlegierung und mit einer auf die Lagermetallschicht gegebenenfalls über eine Zwischenschicht aufgebrachten, bleifreien Laufschicht aus einer Zinkmatrix mit wenigstens einem weiteren Legierungselement

Bleihaltige Laufschichten von Gleitlagern weisen einerseits den Nachteil der Toxizität aufgrund des Bleigehaltes auf und sind anderseits wegen der durch den Bleianteil bedingten geringen Härte verschleißanfällig. Die Versuche, bleifreie Laufschichten zu entwickeln, sind daher häufig mit dem Bemühen nach einer verringerten Verschleißneigung verknüpft. So wurde unter anderem vorgeschlagen (DE 199 63 385 C1), für die Laufschicht eine Zinnmatrix zu verwenden, in die Zinn-Kupfer-Partikel eingelagert sind. Abgesehen davon, daß trotz der Einlagerung der härteren Zinn-Kupfer-Partikel in die weiche Zinnmatrix die Verschleißeigenschaften höheren Ansprüchen nicht genügen können, ist auch die Temperaturbeständigkeit solcher Laufschichten vergleichsweise gering.

Die Versuche, Wismut oder Wismutlegierungen für die Laufschicht eines Gleitlagers einzusetzen, scheitern im allgemeinen an der Sprödigkeit des Wismuts. Selbst der Vorschlag, durch eine bestimmte Orientierung der Wismutkristalle einen entsprechenden Einfluß auf die Härte und Sprödigkeit von Wismut zu nehmen (DE 100 32 624 C2), führte nicht zu entscheidenden Verbesserungen der Lagereigenschaften im Vergleich zu Gleitlagern mit entsprechenden Bleianteilen.

Schließlich wurde ein Gleitlager mit einer Stützschale, mit einer Lagermetallschicht auf Aluminium- oder Kupferbasis und mit einer Laufschicht vorgeschlagen (WO 96/15382 A1), die eine Zinkmatrix mit 0,5 bis 25 Gew.% wenigstens eines zusätzlichen Legierungselementes aus einer Nickel, Kobalt und Eisen enthaltenden Gruppe von Legierungselementen aufweist. Obwohl mit solchen Gleitlagern eine erherbliche Steigerung der Verschleißfestigkeit erzielt werden könnte, sind sie jedoch wegen der hohen Affinität des Zinks zu Stahl für die meisten Anwendungsfälle ungeeignet.

Der Erfindung liegt somit die Aufgabe zugrunde, ein Gleitlager der eingangs geschilderten Art so auszugestalten, daß gute tribologische Eigenschaften mit einer hohen Verschleißfestigkeit verknüpft werden können.

Die Erfindung löst die gestellte Aufgabe dadurch, daß die Zinkmatrix der Laufschicht als zusätzliches Legierungselement 1 bis 49 Gew.% Wismut enthält.

Es hat sich in überraschender Weise herausgestellt, daß durch den Zusatz von Wismut trotz der Zinkmatrix gute tribologische Eigenschaften für die Laufschicht mit einer im Vergleich zu Zink geringen Verreibneigung sichergestellt werden können. Außerdem wird eine duktile Laufschicht erhalten, obwohl Wismut für sich als spröd anzusehen ist. Dies ist für das Einlaufverhalten der Gleitlager und die Schmutzeinbettungsfähigkeit von entscheidender Bedeutung, zumal die Dauerfestigkeit gesteigert wird. Ein Wismutgehalt von 1 Gew.% zeigt bereits einen deutlichen Einfluß auf die tribologischen Eigenschaften der Laufschicht. Besonders vorteilhafte Wirkungen ergeben sich bei einem Wismutgehalt über 4 Gew.%, vorzugsweise über 10 Gew.%. Der Wismutanteil muß allerdings nach oben begrenzt werden, um den Einfluß des Wismuts auf die Sprödigkeit der Laufschicht zu beschränken. Obwohl für besondere Anwendungsfälle ein Wismutanteil bis zu 49 Gew.% möglich ist, wird im allgemeinen der Wismutanteil nicht über 40 Gew.%, vorzugsweise 30 Gew.%, hinausgehen.

Grundsätzlich könnten auch Zinklegierungen mit einem Blei- oder Cadmiumzusatz für Laufschichten eines Gleitlagers Verwendung finden, doch steht die Toxizität dieser Legierungszusätze einem solchen Einsatz entgegen. Zinklegierungen mit Zinn oder Indium als Hauptlegierungszusätze weisen ebenfalls ausreichende tribologische Eigenschaften auf, doch ist die Temperaturbeständigkeit begrenzt. Laufschichten auf Zinkbasis mit Silber als Hauptlegierungszusatz haben gute Laufeigenschaften, doch bildet Silber mit Zink harte intermetallische Phasen.

Die Härte und davon abhängig der Verschleißwiderstand der Laufschicht oder die Korrosionsbeständigkeit können durch weitere Legierungselemente eingestellt werden. Zu diesem Zweck kann die Zinkmatrix neben Wismut wenigstens ein weiteres Legierungselemente aus einer Eisen, Kobalt, Kupfer, Mangan, Nickel, Silber, Zinn, Antimon, Titan, Chrom, Molybdän und Wolfram umfassenden Gruppe von Legierungselementen enthalten, wobei der Einzelanteil dieser Legierungselemente 0,01 bis 15 Gew.% ausmacht, der Summenanteil jedoch höchstens 20 Gew.% beträgt. Um die tribologischen Eigenschaften der Zink-Wismut-Legierung der Laufschicht nicht zu gefährden, ist der Einsatz von zusätzlichen Legierungselementen auf einen Gesamtanteil zu begrenzen, wobei die angegebene untere Grenze des Gehaltes an zusätzlichen Legierungselementen erforderlich ist, um einen entsprechenden Einfluß auf die jeweils zu berücksichtigende Eigenschaft nehmen zu können. Der Einzelanteil der Legierungselemente wird dabei vorzugsweise zwischen 0,1 und 10 Gew.%, insbesondere zwischen 0,3 und 5 Gew.%, liegen.

Von dieser Gruppe von Legierungselementen wird die Untergruppe aus Eisen, Kobalt und Kupfer bevorzugt zur Verstärkung der Zinkmatrix eingesetzt, wobei mit Ausnahme bei Kupfer auch die Korrosionsfestigkeit erhöht wird. Die Legierungselemente dieser Untergruppe sollen insgesamt einen Anteil von 0,2 bis 3 Gew.% ausmachen, wobei der Einzelanteil der Legierungselemente zwischen 0,02 und 3 Gew.% liegt. Mit einem Eisenanteil von 0,3 bis 1 Gew.% kann eine merklich gesteigerte Korrosionsbeständigkeit erzielt werden. Ein zunehmender Eisengehalt wirks sich in einer Zunahme der Härte aus, doch sind Laufschichten mit einem Eisenanteil von 6 bis 15 Gew.% noch immer ausreichend verformbar. Übliche Kobaltgehalte liegen zwischen 0,5 und 2 Gew.% und erhöhen die Korrosionsbeständigkeit vor allem gegenüber Schwefeldioxid. Kupfer ist in der Zinkmatrix bis ca. 1 Gew.% löslich, ohne Ausscheidungen zu bilden. Im Bereich dieses Kupfergehaltes kann eine Erhöhung der Zugfestigkeit bei nahezu unveränderter Verformbarkeit beobachtet werden. Mit dem Anstieg des Kupfergehaltes über 1 Gew.% bilden sich Ausscheidungen, was mit einem Abfall der Verformbarkeit und einem gleichzeitigen Anstieg der der Härte verbunden ist.

Neben diesen Legierungselementen können auch andere der angegebenen Elemente zum Einsatz kommen, um Einfluß auf besondere Eigenschaften nehmen zu können. So bringt in Zink gelöstes Mangan eine deutliche Verbesserung der mechanischen Eigenschaften der Laufschicht mit sich. Da Mangan in Zink bis zu etwa 0,3 Gew.% löslich ist, kann hiefür ein Mangananteil von 0,01 bis 0,3 Gew.% vorgesehen werden. Bei höheren Mangangehalten kommen Eigenschaften zum Tragen, die die Korrosionsbeständigkeit verbessern. Ab Mangangehalten von 12 bis 17 Gew.% muß allerdings mit der Bildung einer Wismut-Mangan-Phase gerechnet werden, wodurch der Weichphasenanteil verringert wird.

Nickel bildet sowohl mit Zink als auch mit Wismut intermetallische Phasen. Da aber die intermetallischen Phasen mit Zink stabiler als die mit Wismut sind, kann eine ausreichende Duktilität der Laufschicht auch bei höheren die Korrosionsbeständigkeit steigernden Nickelgehalten sichergestellt werden. Bei Nickelgehalten unter 0,05 Gew.% bilden sich sehr feine die Festigkeit der Laufschicht verbessernde Ausscheidungen in der Zinkmatrix.

Zur Verringerung der Verreibneigung kann Silber zulegiert werden, das bis zu 2,5 Gew.% in der Zinkmatrix löslich ist. Zu diesem Zweck wird vorzugsweise ein Gehalt von 0,1 bis 1 Gew.% vorgesehen. Silbergehalte über 2,5 Gew.% führen zu Ausscheidungen, die die Härte und Verschleißfestigkeit erhöhen. Freies Zinn bildet mit Zink eine sehr niedrig schmelzende Legierung. Bis zu einem Gehalt von 0,02 Gew.% ist Zinn in Zink löslich und verbessert in einem Anteilsbereich von 0,01 bis 0,02 Gew.% die Korrosionsbeständigkeit der Laufschicht. Antimon wirkt in der Zinkmatrix durch die Bildung einer Phase mit Wismut insbesondere bei höheren Gehalten zusätzlicher Legierungselemente, wie Eisen, Kobalt oder Kupfer, festigkeitssteigernd. Zu diesem Zweck sind Antimonanteile zwischen 0,05 bis 5 Gew.% erforderlich. Titan kann bei Gehalten zwischen 0,1 und 0,5 Gew.% zur Verbesserung der Verschleißfestigkeit der Zinkmatrix eingesetzt werden. Zur Festigkeitssteigerung der Laufschicht kann auch Chrom verwendet werden, und zwar bis zu einem Gehalt von 0,02 Gew.%. Bis zu diesem Gehalt ist Chrom in der Zinkmatrix löslich. Höhere Chromanteile verbessern dien Korrosionsbeständigkeit, wobei die Zinkmatrix bis zu einem Chromgehalt von 10 Gew.% eine ausreichende Duktilität bewahrt. Molybdän weist eine dem Chrom ähnliche Wirkung in der Zinkmatrix auf, hemmt aber zusätzlich im Zinkelektrolyten die Wasserstoffbildung, so daß die Gefahr einer Versprödung durch Wasserstoff wirksam begegnet werden kann. Wolfram ist sowohl in Zink als auch in Wismut unlöslich und wirkt als dritte Phase im Sinne einer Ausscheidungshärtung. Besonders bei Gehalten von etwa 1 Gew.% kann eine spürbare Erhöhung der Verschleißfestigkeit erzielt werden.

Durch eine sich über die Dicke der Laufschicht ändernde Zusammensetzung der Laufschichtlegierung kann in bekannter Weise eine gute Schmutzeinbettfähigkeit während einer Einlaufphase und ein mit zunehmendem Verschleiß größer werdender Verschleißwiderstand erreicht werden. Zu diesem Zweck braucht ja nur dafür gesorgt zu werden, daß der Weichphasenanteil gegen die Lauffläche hin, der Hartphasenanteil aber gegen die Lagermetallschicht hin zunehmen. Um besonders vorteilhafte Einlaufbedingungen zu ermöglichen, kann die Laufschicht mit einer Einlaufschicht aus Wismut abgedeckt werden, die während der Einlaufphase abgetragen wird, so daß nach der Einlaufphase eine verschleißarme Laufschicht zur Wirkung kommt, bei der die Schmutzeinbettfähigkeit keine entscheidende Rolle mehr spielt. Es braucht in diesem Zusammenhang wohl nicht hervorgehoben zu werden, daß durch zusätzliche Einlagerungen härterer Partikel in die Zinkmatrix der Laufschicht die Eigenschaften des Gleitlagers an bestimmte Anforderungen angepaßt werden können. Solche härteren Partikel, beispielsweise aus Titanoxid oder einer Zink-Kupfer-Phase, lagern sich an den Korngrenzen an, so daß die Korngrenzendiffusion und damit die Kornvergröberung behindert wird, was zu gleichbleibenden tribologischen Eigenschaften des Gleitlagers über seine Lebensdauer führt. Als härtere Partikel können auch Aluminium-, Zirkon- oder Siliziumoxid, Silizium- oder Borcarbid, Aluminiumnitrid und Mischoxide mit einem Durchmesser von vorzugsweise 50 bis 500 nm eingesetzt werden. Der Volumsanteil dieser Partikel beträgt bevorzugt 0,1 bis 2 %. Der Einbau härterer Partikel in die Zinkmatrix kann die Verschleißrate auch bei praktisch unveränderter Härte stark senken. Möglicherweise kann dies auf die Polierwirkung dieser härteren Teilchen am zu lagernden Körper zurückgeführt werden. Härtere Partikel mit einer Korngröße unter 100 nm bringen außerdem den Effekt einer Dispersionshärtung mit sich.

Wird als Lagermetallschicht eine Aluminiumlegierung verwendet, so kann die Laufschicht mit einer aus einer Zinkatbeize aufgetragenen Haftvermittlungsschicht unmittelbar auf die Aluminiumlegierung aufgebracht werden. Um dabei eine Diffusion des Zinks in die Aluminiumlegierung zu vermindern, empfiehlt sich ein entsprechender Zinkzusatz zur Aluminiumlegierung. Lagermetallschichten auf der Basis von Kupferlegierungen bedingen im allgemeinen eine Zwischenschicht, um eine Zinkabwanderung in die Lagermetallschicht zu unterbinden. Als Zwischenschichten eigenen sich beispielsweise Legierungen auf der Basis von Zink-Nickel, Zink-Eisen, Zinn-Nickel, Kupfer-Zinn, Kupfer-Zink, Kupfer-Zink-Zinn, Zink-Kobalt, Zinn-Kobalt, Wolfram-Nickel, Molybdän-Nickel und Palladium-Nickel, wobei die Dicke der Zwischensicht bevorzugt zwischen 1 und 3 µm beträgt. Es können aber auch Zwischenschichten z. B. aus Silber, Gold, Platin, Antimon, Palladium oder Chrom zum Einsatz kommen.

### Beispiel 1:

Bei einem Gleitlager mit einer stählernen Stützschale und einer Lagermetallschicht aus einer Messinglegierung wurde eine mehrlagige Laufschicht aufgebracht, wobei die lagermetallseitige Laufschichtlage 10 Gew.% Wismut, 3 Gew.% Eisen, 1 Gew.% Kobalt, Rest Zink mit unvermeidbaren Verunreinigungen aufwies. Die Härte dieser Laufschichtlage betrug 130 HV, die Dicke 5 µm. In der mittleren Laufschichtlage wurde der Wismutanteil auf 20 Gew.% erhöht, wobei die Härte bei einem Eisenanteil von 1,2 Gew.% und einem Kobaltanteil von 0,8 Gew.% auf 70 HV sank. Schließlich wies die oberste Lage einen Wismutanteil von 30 Gew.%, einen Eisenanteil von 0,5 Gew.% und einem Kobaltanteil von 0,3 Gew.% bei einer Härte von 40 HV auf. Diese Lage wurde mit einer Einlaufschicht aus Wismut mit einer Dicke von 3 µm und einer Härte von HV 18 abgedeckt.

### Beispiel 2:

Bei einer auf einer Aluminiumlegierung aufgetragenen Laufschicht mit einem Wismutanteil von 30 Gew.% und einem Kupferanteil von 0,5 Gew.%, Rest Zink mit unvermeidbaren Verunreinigungen, wurden zusätzlich Titanoxidpartikel in einer Menge von 0,8 Gew.% in die Zinkmatrix eingelagert, wobei eine Härte von 35 HV erzielt wurde. Die durchschnittliche Korngröße der Titanoxidteilchen betrug 0,2 µm.

### Beispiel 3:

In einem weiteren Ausführungsbeispiel wurde als Lagermetallschicht eine Kupfer-Zinn-Zink-Legierung mit einer Härte von 180 HV eingesetzt, auf die eine Zwischenschicht aus einer Zink-Nickel-Legierung mit 12 Gew.% Nickel in einer Dicke von 2 µm (Härte 550 HV) als Diffusionssperre aufgebracht wurde. Die Laufschicht wurde in einer Dicke von 15 µm abgeschieden und enthielt einen Wismutanteil von 30 Gew.% sowie einen Anteil von 3 Gew.% Kobalt und 0,2 Gew.% Nickel, Rest Zink mit unvermeidbaren Verunreinigungen. Die Härte dieser Laufschicht betrug 50 HV. Zur Verbesserung des Einlaufverhaltens wurde eine Einlaufschicht von 3 µm aus Wismut vorgesehen.

Um das Verschleißverhalten zu überprüfen, wurden einerseits erfindungsgemäße Gleitlager gemäß den Beispielen 1 bis 3 und anderseits bekannte Gleitlager unter übereinstimmenden Prüfbedingungen ausgesetzt, wobei die wechselnde dynamische Belastung schrittweise auf 80 MPa bei einer Gleitgeschwindigkeit von 13,2 m/s (6000 U/min) erhöht und dann über einen Zeitzraum von 25 h beibehalten wurde. Die Temperatur des zugeführten Schmieröls 5W-40SE betrug 130°C.

Es wurden die Freßgrenzlast, also die Last, bei der es zu einem Festfressen zwischen der Laufschicht des Gleitlagers und der Welle kam, und der aufgetretene Verschleiß in Form der abgetragenen Schichtdicke gemessen. Außerdem wurde die Härte der Laufschicht im metallografischen Querschnitt mit einem Mikrohärteprüfer nach Vickers ermittelt. Diese Härte korreliert gut mit der Schmutzeinbettfähigkeit, die mit zunehmender Härte abnimmt. Die ebenfalls ermittelte Temperaturbeständigkeit stimmt im wesentlichen mit der aus dem Phasendiagramm ablesbaren (eutektischen) Schmelztemperatur überein. Die erfaßten Werte sind in der folgenden Tabelle zusammengefaßt, wobei in den Zeilen 1 bis 3 die Ergebnisse für die Lager nach den Beispielen 1 bis 3 angegeben sind. Die Zeile 4 betrifft ein Gleitlager mit einer Lagermetallschicht aus Bleibronze mit einer auf einer Nickelzwischenschicht abgeschiedenen Laufschicht auf Bleibasis. Die Werte in der Zeile 5 gehören zu einem Gleitlager mit einer Lagermetallschicht auf Messingbasis mit einer Laufschicht auf Zinnbasis und einer Zwischenschicht aus Nickel. Die Prüfungsergebnisse für ein Lager mit einer Lagermetallschicht auf Messingbasis, einer Zwischenschicht aus Silber und einer Laufschicht aus Wismut sind in Zeile 6 zusammengefaßt. Schließlich werden in Zeile 7 die Ergebnisse für eine Gleitlager mit einer Lagermetallschicht auf Messingbasis, einer Zwischenschicht aus einer Nickel-Zinklegierung und einer Laufschicht aus Zink wiedergegeben.

| | Laufschicht | Freßgrenzlast (MPa) | Verschleiß (µm) | Härte (HV) | Temperatur (°C) |
|---|---|---|---|---|---|
| 1 | ZnBiFeCo, mehrlagig Einlaufschicht Bi | >80 | 8 | 40 - 130 18 | 255 |
| 2 | ZnBi30Cu0,5TiO₂ | >80 | 2 | 35 | 255 |
| 3 | ZnBi30Co3Ni0,2 Einlaufschicht Bi | >80 | 5 | 50 18 | 255 |
| 4 | PbSn15Cu3 | >80 | 18 | 16 | 280 |
| 5 | SnCu5 | >80 | 16 | 23 | 227 |
| 6 | Bi | >80 | 19 | 18 | 271 |
| 7 | Zn | 10 | - | 45 | 419 |

## Patentansprüche

1. Gleitlager mit einer von einer Stützschale getragenen Lagermetallschicht aus einer Aluminium- oder Kupferlegierung und mit einer auf die Lagermetallschicht gegebenenfalls über eine Zwischenschicht aufgebrachten, bleifreien Laufschicht aus einer Zinkmatrix mit wenigstens einem weiteren Legierungselement, **dadurch gekennzeichnet, daß** die Zinkmatrix der Laufschicht als weiteres Legierungselement 1 bis 49 Gew.% Wismut enthält.

2. Gleitlager nach Anspruch 1, **dadurch gekennzeichnet, daß** die Zinkmatrix der Laufschicht 4 bis 40 Gew.% Wismut, vorzugsweise 10 bis 30 Gew.% Wismut enthält.

3. Gleitlager nach Anspruch 1 oder 2, **dadurch gekennzeichnet, daß** die Zinkmatrix neben Wismut wenigstens ein weiteres Legierungselemente aus einer Eisen, Kobalt, Mangan, Kupfer, Nickel, Silber, Zinn, Antimon, Titan, Chrom, Molybdän und Wolfram umfassenden Gruppe von Legierungselementen enthält, wobei der Einzelanteil dieser Legierungselemente 0,01 bis 15 Gew.% ausmacht, der Summenanteil jedoch höchstens 20 Gew.% beträgt.

4. Gleitlager nach Anspruch 3, **dadurch gekennzeichnet, daß** der Einzelanteil der Legierungselemente aus der Eisen, Kobalt, Kupfer, Mangan, Nickel, Silber, Zinn, Antimon, Titan, Chrom, Molybdän und Wolfram umfassenden Gruppe von Legierungselementen zwischen 0,1 und 10 Gew.%, vorzugsweise zwischen 0,3 und 5 Gew.% liegt.

5. Gleitlager nach Anspruch 3, **dadurch gekennzeichnet, daß** beim Einsatz wenigstens eines Legierungselementes aus der Eisen, Kobalt und Kupfer enthaltenden Untergruppe an Legierungselementen der Anteil dieser Untergruppe mindestens 0,2 Gew.%, höchstens aber 3 Gew.% beträgt, während der Einzelanteil der Legierungselemente zwischen 0,02 bis 3 Gew.% liegt.

6. Gleitlager nach einem der Ansprüche 1 bis 5, **dadurch gekennzeichnet, daß** die Laufschicht mit einer Einlaufschicht aus Wismut abgedeckt ist.

## Claims

1. Sliding bearing having a bearing metal layer which is supported by a support shell, consists of an aluminium or copper alloy and has a lead-free running layer which is applied to the bearing metal layer optionally via an intermediate layer and consists of a zinc matrix having at least one further alloy element, **characterised in that** the zinc matrix of the running layer contains 1 to 49 wt.% bismuth as the further alloy element.

2. Sliding bearing as claimed in claim 1, **characterised in that** the zinc matrix of the running layer contains 4 to 40 wt.% bismuth, preferably 10 to 30 wt.% bismuth.

3. Sliding bearing as claimed in claim 1 or 2, **characterised in that** the zinc matrix contains, in addition to bismuth, at least one further alloy element from a group of alloy elements comprising iron, cobalt, manganese, copper, nickel, silver, tin, antimony, titanium, chromium, molybdenum and tungsten, wherein the individual proportion of these alloy elements makes up 0.01 to 15 wt.%, but the total proportion amounts at most to 20 wt.%.

4. Sliding bearing as claimed in claim 3, **characterised in that** the individual proportion of the alloy elements from the group of alloy elements comprising iron, cobalt, copper, manganese, nickel, silver, tin, antimony, titanium, chromium, molybdenum and tungsten is between 0.1 and 10 wt.%, preferably between 0.3 and 5 wt.%.

5. Sliding bearing as claimed in claim 3, **characterised in that** when at least one alloy element from the subgroup of alloy elements containing iron, cobalt and copper is used, the proportion of this subgroup amounts at least to 0.2 wt.%, but at most to 3 wt.%, whereas the individual proportion of the alloy elements is between 0.02 to 3 wt%.

6. Sliding bearing as claimed in any one of claims 1 to 5, **characterised in that** the running layer is covered by a running-in layer consisting of bismuth.

## Revendications

1. Palier lisse avec une couche support métallique supportée par une coque de support, en alliage d'aluminium ou de cuivre et avec une couche antifriction exempte de plomb, appliquée sur la couche support métallique, le cas échéant, par le biais d'une couche intermédiaire, en une matrice de zinc, avec au moins un autre élément d'alliage, **caractérisé en ce que** la matrice de zinc de la couche antifriction contient 1 à 49 % en poids de bismuth en tant qu'autre élément d'alliage.

2. Palier lisse selon la revendication 1, **caractérisé en ce que** la matrice de zinc de la couche antifriction contient 4 à 40 % en poids de bismuth, de préférence 10 à 30 % en poids de bismuth.

3. Palier lisse selon la revendication 1 ou 2, **caractérisé en ce que** la matrice de zinc comprend, outre du bismuth, au moins un autre élément d'alliage issu d'un groupe d'éléments d'alliage, comprenant du fer, cobalt, manganèse, cuivre, nickel, argent, étain, antimoine, titane, chrome, molybdène et tungstène, la part individuelle de ces éléments d'alliage s'élevant de 0,01 à 15 % en poids, le montant total étant cependant tout au plus de 20 % en poids.

4. Palier lisse selon la revendication 3, **caractérisé en ce que** la part individuelle des éléments d'alliage issus du groupe d'éléments d'alliage, comprenant du fer, cobalt, cuivre, manganèse, nickel, argent, étain, antimoine, titane, chrome, molybdène et tungstène, est comprise entre 0,1 et 10 % en poids, de préférence entre 0,3 et 5 % en poids.

5. Palier lisse selon la revendication 3, **caractérisé en ce que** lors de l'utilisation d'un élément d'alliage issu du sous-groupe comprenant du fer, cobalt et cuivre, au niveau des éléments d'alliage, la part de ce sous-groupe est au moins de 0,2 % en poids, mais tout au plus de 3 % en poids, tandis que la part individuelle des éléments d'alliage se situe entre 0,02 et 3 % en poids.

6. Palier lisse selon l'une des revendications 1 à 5, **caractérisé en ce que** la couche antifriction est couverte d'une couche de rodage en bismuth.
